# EUROPEAN PATENT APPLICATION

(11) **EP 4 385 677 A1**
(43) Date of publication of application: **19.06.2024**
(21) Application number: 22214157.4
(22) Date of filing: 16.12.2022
(51) Int. Cl.: B25J 9/16

(54) **METHOD AND CALIBRATION SYSTEM FOR CALIBRATING AUTONOMOUS MOBILE MACHINES**

(71) Applicant: Siemens Aktiengesellschaft, 80333 München (DE)
(72) Inventor: Meyer-Delius di Vasto, Daniel, 81545 München (DE)
(74) Representative: Siemens Patent Attorneys

(57) **Abstract**

In order to calibrate autonomous mobile machines, by which the machines are self-calibrated, it is proposed, when <1> an autonomous mobile machine (AMM), e.g., an "Automated Guided Vehicle <AGV>", includes a mobile base unit (MBU) and a 6D-motions controlled manipulator (MPL) and is equipped with a sensor device (SD), e.g., a laser scanner (LS), which is attached to the mobile base unit (MBU), <**2**> measurement series (MMS) are taken (tk) on a calibration object (COB, COB_{cs}, CHE) with the sensor device (SD) to provide sensor device data (SDDT), to <**i**> attach (att) the calibration object (COB, COB_{cs}, CHE) rigidly to the 6D-motions controlled manipulator (MPL), which is movable according to the 6D-motions of the manipulator (MPL) within a sensor device field view plane (SDFVP) being considered preferably as a 2D-slice of a 3D-environment, and <**ii**> compute (cmp) an accurate estimation of the mounting pose (MP, MP_{3D}, MP_{6D}) of the sensor device (SD, LS) for calibrating the autonomous mobile machine (AMM) based on geometry data (GDT) of the calibration object (COB, COB_{cs}, CHE), motion data (MDT) of the manipulator (MPL) and the sensor device data (SDDT).

## Description

The invention refers to a method for calibrating autonomous mobile machines according to the preamble claim 1 and a calibration system for calibrating autonomous mobile machines according to the preamble claim 8.

By the present application it is addressed a matter of automatically measuring a mounting position of a sensor device, such as a laser scanner, being attached on an autonomous mobile machine, which is preferably designed as an "Automated Guided Vehicle <AGV>" or a mobile robot. The autonomous mobile machine consists in general of a mobile base unit and a 6D-motions controlled manipulator, such as a robotic arm, and is equipped with the sensor device respectively the laser scanner, which attached to the mobile base unit.

An accurate measurement of the mounting position of the sensor device is needed for reliable and precise operation of the autonomous mobile machine, especially for docking maneuvers where a high localization accuracy is required. However, accurate data is not always available due to large construction tolerances typical in autonomous mobile machines. Furthermore, the mounting position of sensor devices can also change during operation after the initial construction and commissioning, for example, due to collisions or maintenance, e.g. the sensor device is replaced. Accurately measuring the mounting position of the sensor device in the autonomous mobile machine is an involved and time-consuming task.

According to the state of the art a rough estimate about the mounting position of a sensor device in an autonomous mobile machine is usually obtained from the construction blueprints. This initial estimate is usually adjusted in an iterative process using some software for visualizing sensor device data to validate the correctness of the measured data after adjusting the mounting position parameters.

There are well-known approaches for automatically measuring the position of a sensor device in an autonomous mobile machine. These approaches are based on detecting objects in a series of measurements. These measurements are usually made by placing some calibration objects within a field of view of the sensor device in a predefined configuration and moving the autonomous mobile machine in some predefined pattern so that the calibration objects can be measured by the sensor device from multiple points of view. The geometrical configuration of the objects detected over the multiple measurements together with the data about the motion of the automation machine is used to formulate an optimization problem. From the solution of this optimization problem, the position of the sensor device is obtained.

These approaches have three important disadvantages.

Firstly, they rely on the autonomous mobile machine's estimation about its own motion, which is typically inaccurate and suffers from incremental errors, leading to inaccuracies in the results.

Secondly, free space is needed for placing the calibration objects and moving the AGV. Ideally, only the calibration objects should be within the field of view of the sensor device during the calibration process, and since the objects must be measured from multiple points of view, some space is needed for maneuvering the autonomous mobile machine. Such free space is not always available in the operative environment of the autonomous mobile machine.

Thirdly, these approaches only compute the pose and orientation of the sensor device, assuming that they are horizontally and vertically leveled. These approaches not able to estimate a full 6D position of the sensor device.

It is an objective of the invention to propose a method and calibration system for calibrating autonomous mobile machines, by which the machines are self-calibrated.

This objective is solved with regard to a method defined in the preamble of claim 1 by the features in the characterizing part of claim 1.

The objective is further solved with regard to a calibration system defined in the preamble of claim 8 by the features in the characterizing part of claim 8.

The main idea of the invention according to the claims 1 and 8 is to utilize a calibration object - being easily detectable by a sensor device, in particular a laser scanner, which is attached to or housed in an autonomous mobile machine to be self-calibrated and designed preferably as an "Automated Guided Vehicle <AGV>" - that is actively moved within a 3D-environment in front of the sensor device by a manipulator, e.g., a robotic arm, of the autonomous mobile machine for automatically and accurately measuring a mounting pose (combination of position and orientation) of the sensor device. For calibrating the autonomous mobile machine, the calibration object is rigidly attached to the manipulator and automatically moved by the manipulator so that the calibration object is detected by the sensor device. By fusing geometry data of the calibration object, motion data of the manipulator and sensor device data provided by the sensor device when detecting the calibration object, an accurate estimation of the mounting pose of the sensor device is automatically computed and even preferably validated.

According to this idea the realization to calibrate autonomous mobile machines is implemented by
(i) the autonomous mobile machine including a mobile base unit and a 6D-motions controlled manipulator and being equipped with the sensor device, which is attached to the mobile base unit,
(**ii**) taking measurement series on the calibration object with the sensor device for providing the sensor device data,
(**iii**) attaching the calibration object rigidly to the 6D-motions controlled manipulator, which is movable according to the 6D-motions of the manipulator within a sensor device field view plane being considered preferably as a 2D-slice of a 3D-environment,
(**iv**) computing the accurate estimation of the mounting pose of the sensor device for calibrating the autonomous mobile machine based on the geometry data of the calibration object, the motion data of the manipulator and the sensor device data.

The approach outlined above distinguishes from known solutions for example from those discussed in the introductory part that the manipulator of the autonomous mobile machine moves the calibration object, while according to the known solutions it is done the other way around, where the autonomous mobile machine moves around several calibration objects.

The proposed approach has several advantages compared to the state of the art:
- So, a full 6D-based calibration is possible. By exploiting the whole degrees of freedom of motion the 6D-motions controlled manipulator is able to perform the full 6D mounting pose of the sensor device can be estimated, instead of only "2D plus orientation"-values usually estimated by the solutions according to the state of the art.
- Only minimal space and configuration requirements are necessary. By moving the calibration object around the autonomous mobile machine equipped with the sensor device, and not moving it around several calibration objects, the proposed approach has minimal space and environment configuration requirements. Calibration can be performed on the operation site without the need of a large area that must be blocked during calibration.
- The calibration process is faster, because it is shorter when the calibration object is moved around the autonomous mobile machine equipped with the sensor device compared to moving the whole autonomous mobile machine equipped with the sensor device around the calibration objects.
- The calibration process is more accurate. So, the motions of the manipulator are usually more accurate than the motions of the autonomous mobile machine. This is exploited in an optimization process formulating an optimization problem (cf. claims 3 and 9) to obtain more accurate results. Furthermore, the degrees of freedom of motion the 6D-motions controlled manipulator is able to perform allow for generating detection traces with richer information than the ones that can be obtained when the whole autonomous mobile machine is moving around the calibration objects.

Beneficial developments of this idea underlying the invention are given by the dependent claims 2 to 7 respectively the dependent claims 9 to 14.

So according to the claims 2 and 9 it is advantageous when the calibration object is of the calibration object has a geometry the accurate estimation of the mounting pose in the measurement series for a given measurement configuration is computed analytically.
a material and a shape the calibration object is detectable readily and correctly by the sensor device and of a geometry the measurement series for a given configuration are computed analytically.

In this context it is an advantage (**i**) according to the claim 5 respectively 12 when the calibration object is of a material and a shape the calibration object is detectable readily and correctly by the sensor device and (**ii**) according to the claims 6 and 7 respectively the claims 13 and 14 when the calibration object is used as a cone-shaped calibration object or is a two-function piece connected or shaped hand-held device with a handle and a cone-shaped calibration head, wherein when the optimization process formulating the optimization problem is used a circle fitting algorithm can be applied to estimate a diameter of the cone-shaped calibration object and to use this estimation-related information to improve the optimization problem of the optimization process.

In order to apply the optimization process formulating the optimization problem it is advantageous according to the claims 3 and 10 that (**i**) a detection trace based on the sensor device data and the geometry data is created by using the 6D-motions controlled manipulator to move the calibration object within the sensor device field view plane, wherein due to this movement the detection trace provides a 2D-pose of the calibration object relative to the sensor device, **(ii)** the detection trace is matched to a reference trace computed using the geometry data of the calibration object and the motion data of the 6D-motions controlled manipulator, **(iii)** the matched traces are used in the optimization process, wherein a result of the optimization problem corresponds to an accurate estimation of a 3D-mounting pose or an accurate estimation of a 6D-mounting pose of the sensor device for calibrating the autonomous mobile machine.

The 3D-mounting pose or the 6D-mounting pose of the sensor device along a longitudinal axis and a transverse axis can be estimated advantageously according to the claims 5 and 11 by controlling intersections with the sensor device field view plane due to moving the calibration object in a vertical direction to the sensor device field view plane.

Besides the above, advantageous further developments of the invention arise out of the following description of a preferred embodiment of the invention according to FIGURES 1 to 9. They show:
FIGURE 1 a sensor device equipped, autonomous mobile machine self-calibrated within a calibration system,
FIGURE 2 the self-calibrated, autonomous mobile machine within the calibration system with a sensor device field view plane,
FIGURE 3 the calibration system to self-calibrate the autonomous mobile machine according to the FIGURE 1 by attaching a calibration object to a manipulator of the autonomous mobile machine,
FIGURE 4 the calibration system to self-calibrate the autonomous mobile machine with the attached calibration object according to the FIGURE 3 intersecting the sensor device field view plane according to the FIGURE 2,
FIGURE 5 the calibration system to self-calibrate the autonomous mobile machine with the attached calibration object intersecting the sensor device field view plane according to the FIGURE 4 thereby creating a detection trace by moving the calibration object within sensor device field view plane,
FIGURE 6 the calibration system to self-calibrate the autonomous mobile machine with the attached calibration object intersecting the sensor device field view plane according to the FIGURES 4 and 5 for allowing to estimate a mounting pose of the sensor device along a longitudinal axis,
FIGURE 7 the calibration system to self-calibrate the autonomous mobile machine with the attached calibration object intersecting the sensor device field view plane according to the FIGURES 4 and 5 for allowing to estimate a mounting pose of the sensor device along a transverse axis,
FIGURE 8 a cone-shaped calibration object, by which when changing the height at which the cone intersects the field of view of the laser circular arcs of different diameter are obtained or when tilting the cone ellipses of changing axis lengths are obtained,
FIGURE 9 a flowchart of providing an accurate estimation of a mounting pose of the sensor device for calibrating the autonomous mobile machine depicted in the FIGURES 4 and 5.

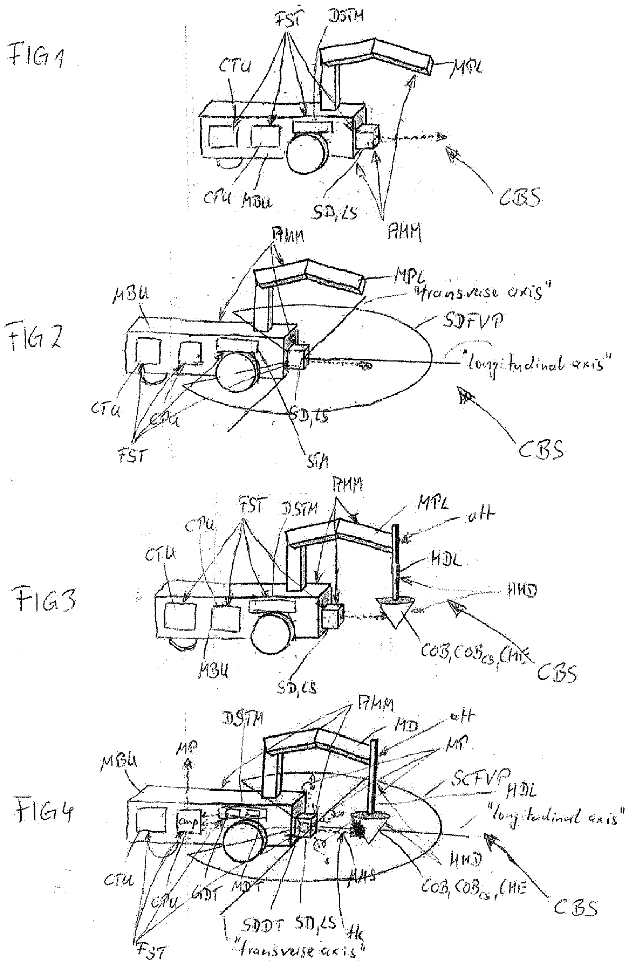

FIGURE 1 shows an autonomous mobile machine AMM self-calibrated within a calibration system CBS. The autonomous mobile machine AMM, which is for example an "Automated Guided Vehicle <AGV>" and part of the calibration system CBS, includes a mobile base unit MBU and a 6D-motions controlled manipulator MPL and is equipped with a sensor device SD. The sensor device SD is preferably a laser scanner LS and is attached to the mobile base unit MBU. The sensor device SD is used for localization and navigation of the autonomous mobile machine AMM. Although the FIGURE 1 shows only one sensor device SD it is also possible that the autonomous mobile machine AMM contains more than one sensor device SD.

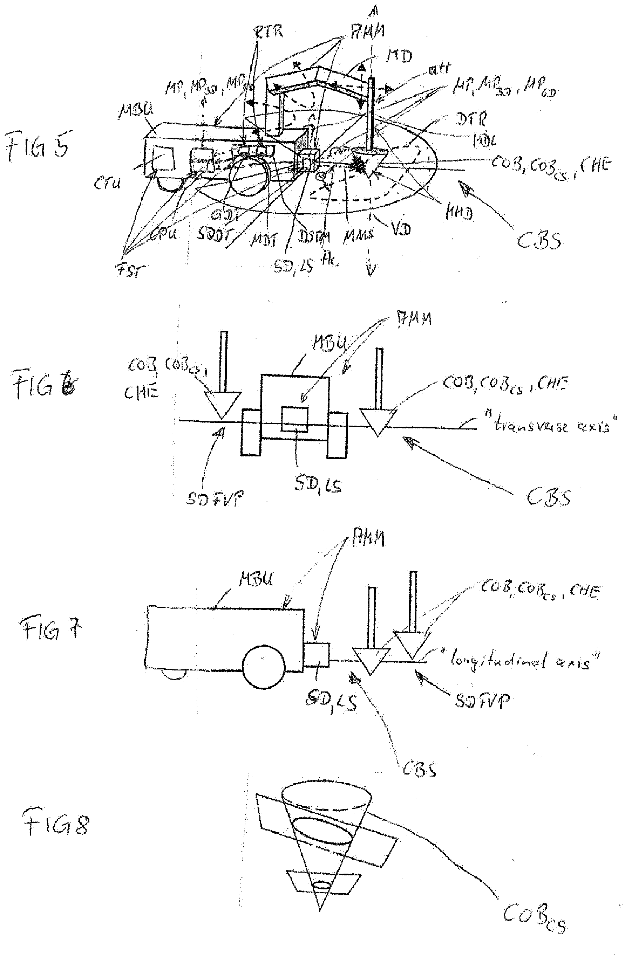

To control the 6D-motions of the manipulator MPL and the mobility of the autonomous mobile machine AMM a control unit CTU is included in the mobile base unit MBU. Besides this control unit CTU the mobile base unit MBU includes further a computing unit CPU and a data storage medium DSTM. The computing unit CPU, the sensor device SD, LS, the control unit CTU and the data storage medium DSTM form a functional structure FST for the self-calibration of the autonomous mobile machine AMM. The relevance of the functional structure FST regarding the self-calibration of the autonomous mobile machine AMM will be described later with respect to the description of FIGURES 4 and 5.

FIGURE 2 shows in addition to the autonomous mobile machine AMM self-calibrated within the calibration system CBS of the FIGURE 1 the depiction of a sensor device field view plane SDFVP, which as a 2D-slice of a 3D-environment which is spanned through a longitudinal axis and a transverse axis of the sensor device SD essentially in front of the sensor device SD, LS. How the 2D-slice cuts the 3D-environment depends on a mounting pose of the sensor device SD attached to the mobile base unit MBU.

FIGURE 3 shows in addition to the autonomous mobile machine AMM self-calibrated within the calibration system CBS of the FIGURE 1 the depiction of a calibration object COB as a further part of the calibration system CBS, which is attached att rigidly to the 6D-motions controlled manipulator MPL and is movable according to the 6D-motions of the manipulator MPL controlled by the control unit CTU in consideration of the depiction in the FIGURE 2 within the sensor device field view plane SDFVP (cf. FIGURES 4 and 5).

The calibration object COB is of a material and a shape the calibration object COB is detectable readily and correctly by the sensor device. So, the calibration object COB is advantageously designed as a hand-held device HHD with a handle HDL and a cone-shaped calibration head CHE. The length and shape of the handle HDL depend on a range or reach and an attachment device, e.g. a gripper, of the manipulator MPL. Important is that the cone-shaped calibration head CHE being cone-shaped can be moved within the sensor device field view plane SDFVP. Alternatively, the calibration object COB can be preferably designed as a cone-shaped calibration object COB_{cs}.

FIGURE 4 shows in the context of the FIGURES 1 to 3 the calibration system CBS to self-calibrate the autonomous mobile machine AMM with according to the FIGURE 3 the calibration object COB, COB_{cs}, CHE attached att to the 6D-motions controlled manipulator MPL and being movable according to the 6D-motions of the manipulator MPL controlled by the control unit CTU thereby due to the controlled 6D-motions intersecting the sensor device field view plane SDFVP according to the FIGURE 2.

In this system constellation the sensor device SD, LS takes tk measurement series MMS on the calibration object COB, COB_{cs}, CHE, wherein due to the measurement series MMS sensor device data SDDT are provided. The provided sensor device data SDDT are inputted into the computing unit CPU for further processing with regard to the self-calibration of the autonomous mobile machine AMM.

In this context also the data storage medium DSTM already mentioned with regard to the FIGURE 1 is used to store geometry data GDT of the calibration object COB, COB_{cs}, CHE and motion data MDT related to the motions of the 6D-motions controlled manipulator MPL. As the sensor device data SDDT the cited data GDT, MDT are also inputted into the computing unit CPU.

Based on the inputted geometry data GDT, the inputted motion data MDT and the inputted sensor device data SDDT the computing unit CPU of the formed functional structure FST for the self-calibration of the autonomous mobile machine AMM computes cmp an accurate estimation of a mounting pose MP of the sensor device SD, LS for calibrating the autonomous mobile machine AMM.

The calibration object COB, COB_{cs}, CHE has preferably a geometry the accurate estimation of the mounting pose MP, MP_{3D}, MP_{6D} in the measurement series MMS for a given measurement configuration is computed analytically.

FIGURE 5 shows based on the depiction in the FIGURE 4 the calibration system CBS to self-calibrate the autonomous mobile machine AMM with the attached calibration object COB, COB_{cs}, CHE intersecting the sensor device field view plane SDFVP thereby creating a detection trace DTR by moving the calibration object COB, COB_{cs}, CHE within sensor device field view plane SDFVP.

For this purpose the computing unit CPU is designed such that the detection trace DTR based on the sensor device data SDDT and the geometry data GDT is created, wherein due to the movement of the calibration object COB, COB_{cs}, CHE the detection trace DTR provides a 2D-pose of the calibration object COB, COB_{cs}, CHE relative to the sensor device SD, LS.

The computing unit CPU is designed further such that the created detection trace DTR is matched to a reference trace RTR computed using the geometry data GDT of the calibration object COB, COB_{cs}, CHE and the motion data MDT of the 6D-motions controlled manipulator MPL.

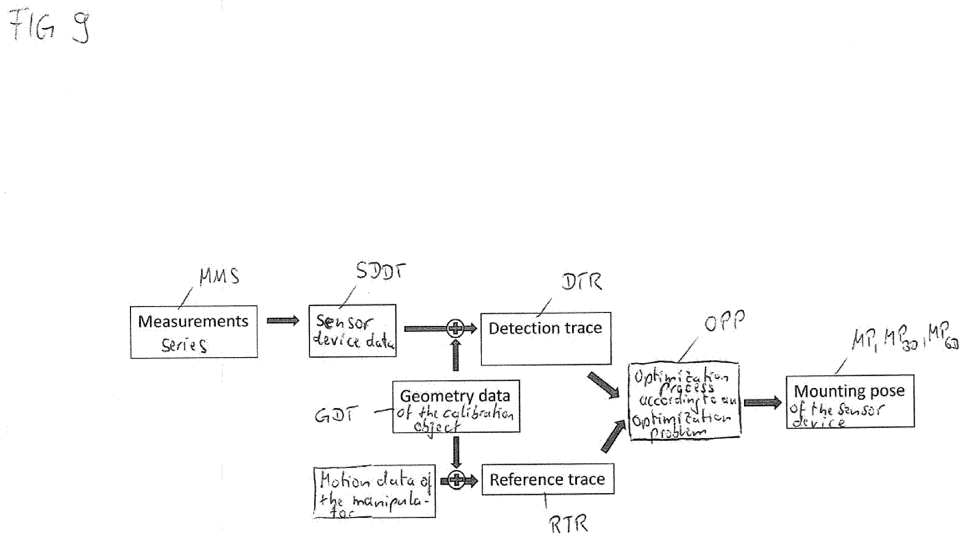

Furthermore the computing unit CPU is designed such that an optimization process OPP formulating an optimization problem (cf. FIGURE 9) is applied by using the matched traces DTR, RTR, wherein a result of the optimization problem provides the accurate estimation of the mounting pose MP of the sensor device SD, LS and corresponds to an accurate estimation of a 3D-mounting pose MP_{3D} or an accurate estimation of a 6D-mounting pose MP_{6D} of the sensor device SD, LS for calibrating the autonomous mobile machine AMM.

In addition, when the two-function piece connected or shaped hand-held device HHD with the handle HDL and the cone-shaped calibration head CHE or alternatively the cone-shaped calibration object COB_{CS} is used and when the computing unit CPU is designed such that a circle fitting algorithm is used in the computing unit CPU to estimate a diameter of the cone-shaped calibration head CHE respectively the cone-shaped calibration object COB, COB_{cs}, CHE, the optimization problem of the optimization process can be improved by this estimated diameter-information.

The key insight of all this is that the reference trace RTR computed by the computing unit CPU using the geometry data GDT of the calibration object COB, COB_{cs}, CHE and the motion data MDT of the 6D-motions controlled manipulator MPL, which are based on very accurate 6D-motions executed of the manipulator MPL under the control of the control unit CTU can be considered as "real" or "ground truth" data. The discrepancies in comparison to the sensor device data SDDT are due to sensor device noise and an inaccurate mounting pose of the sensor device SD, LS which is then corrected by the optimization process.

FIGURE 6 shows the calibration system CBS to self-calibrate the autonomous mobile machine AMM with the attached calibration object COB, COB_{cs}, CHE intersecting the sensor device field view plane SDFVP according to the FIGURES 4 and 5 for allowing to estimate the 3D-mounting pose MP_{3D} or the 6D-mounting pose MP_{6D} of the sensor device SD, LS along a longitudinal axis.

FIGURE 7 shows the calibration system CBS to self-calibrate the autonomous mobile machine AMM with the attached calibration object COB, COB_{cs}, CHE intersecting the sensor device field view plane SDFVP according to the FIGURES 4 and 5 for allowing to estimate the 3D-mounting pose MP_{3D} or the 6D-mounting pose MP_{6D} of the sensor device SD, LS along a transverse axis.

The degrees of freedom of motion of the 6D-motions controlled manipulator MPL device can be exploited advantageously to generate detection traces DTR that contain additional information to be considered in the optimization problem of the optimization process OPP (cf. FIGURE 9).

So, the calibration object COB, COB_{cs}, CHE can be moved according to the FIGURE 5 in a vertical direction VD thereby controlling the intersection with the laser scanner field of view plane SDFVP. In this way, the accurate estimation of the 3D-mounting pose MP_{3D} or the accurate estimation of a 6D-mounting pose MP_{6D} of the sensor device SD, LS can be computed.

The FIGURES 6 and 7 illustrate how moving the calibration object COB, COB_{cs}, CHE in the vertical direction VD can be used to control the intersection with the field of view plan SDFVP and thereby allowing to estimate the 3D-mounting pose MP_{3D} or the 6D-mounting pose MP_{6D} of the sensor device SD, LS along the longitudinal axis (i.e. roll effect; cf. FIGURE 6) and the transverse axis (i.e. pitch effect; cf. FIGURE 7).

FIGURE 8 shows the cone-shaped calibration object COB_{cs}, by which when changing the height at which the cone intersects the field of view of the laser circular arcs of different diameter are obtained or when tilting the cone ellipses of changing axis lengths are obtained.

By doing so and due to the cone-shaped calibration object COB_{cs} geometry it is beneficial that the accurate estimation of the mounting pose MP, MP_{3D}, MP_{6D} in the measurement series MMS for a given measurement configuration can be computed analytically.

FIGURE 9 shows a flowchart of providing the accurate estimation of the mounting pose MP of the sensor device SD, LS, which corresponds to the accurate estimation of the 3D-mounting pose MP_{3D} or the accurate estimation of a 6D-mounting pose MP_{6D} of the sensor device SD, LS for calibrating the autonomous mobile machine AMM depicted in the FIGURES 4 and 5 and described accordingly.

## Claims

1. Method for calibrating autonomous mobile machines, by which
- an autonomous mobile machine (AMM), in particular an "Automated Guided Vehicle <AGV>", with a mobile base unit (MBU) and a 6D-motions controlled manipulator (MPL) is equipped with a sensor device (SD), in particular a laser scanner (LS), being attached to the mobile base unit (MBU),
- taking (tk) measurement series (MMS) on a calibration object (COB, COB_{cs}, CHE) with the sensor device (SD),
- due to the measurement series (MMS) sensor device data (SDDT) are provided,
**characterized by**:
- attaching (att) the calibration object (COB, COB_{cs}, CHE) rigidly to the 6D-motions controlled manipulator (MPL) and being movable according to the 6D-motions of the manipulator (MPL) within a sensor device field view plane (SDFVP), in particular being considered as a 2D-slice of a 3D-environment,
- computing (cmp) an accurate estimation of a mounting pose (MP, MP_{3D}, MP_{6D}) of the sensor device (SD, LS) for calibrating the autonomous mobile machine (AMM) based on geometry data (GDT) of the calibration object (COB, COB_{cs}, CHE), motion data (MDT) of the manipulator (MPL) and the sensor device data (SDDT).

2. Method according to claim 1, **characterized in that** the calibration object (COB, COB_{cs}, CHE) has a geometry the accurate estimation of the mounting pose (MP, MP_{3D}, MP_{6D}) in the measurement series (MMS) for a given measurement configuration is computed analytically.

3. Method according to claim 1 or 2, **characterized in that**
- a detection trace (DTR) based on the sensor device data (SDDT) and the geometry data (GDT) is created by using the 6D-motions controlled manipulator (MPL) to move the calibration object (COB, COB_{cs}, CHE) within the sensor device field view plane (SDFVP), wherein due to this movement the detection trace (DTR) provides a 2D-pose of the calibration object (COB, COB_{cs}, CHE) relative to the sensor device (SD),
- the detection trace (DTR) is matched to a reference trace (RTR) computed using the geometry data (GDT) of the calibration object (COB, COB_{cs}, CHE) and the motion data (MDT) of the 6D-motions controlled manipulator (MPL),
- an optimization process (OPP) formulating an optimization problem is applied by using the matched traces (DTR, RTR), wherein a result of the optimization problem corresponds to an accurate estimation of a 3D-mounting pose (MP_{3D}) or an accurate estimation of a 6D-mounting pose (MP_{6D}) of the sensor device (SD, LS) for calibrating the autonomous mobile machine (AMM).

4. Method according to claim 3, **characterized in that** by controlling intersections with the sensor device field view plane (SDFVP) due to moving the calibration object (COB, COB_{cs}, CHE) in a vertical direction (VD) to the sensor device field view plane (SDFVP) the 3D-mounting pose (MP_{3D}) or the 6D-mounting pose (MP_{6D}) of the sensor device (SD, LS) along a longitudinal axis and a transverse axis is estimated.

5. Method according to one of the claims 1 to 4, **characterized in that**
the calibration object (COB, COB_{cs}, CHE) is of a material and a shape the calibration object (COB, COB_{cs}, CHE) is detectable readily and correctly by the sensor device (SD, LS).

6. Method according to claim 1 or 2, **characterized in that**
the calibration object (COB, COB_{cs}, CHE) is used as a cone-shaped calibration object (COB_{cs}) or is a two-function piece connected or shaped hand-held device (HHD) with a handle (HDL) and a cone-shaped calibration head (CHE).

7. Method according to claim 3 or 4, **characterized in that**
- the calibration object (COB, COB_{cs}, CHE) is used as a cone-shaped calibration object (COB_{cs}) or is a two-function piece connected or shaped hand-held device (HHD) with a handle (HDL) and a cone-shaped calibration head (CHE),
- a circle fitting algorithm is used to estimate a diameter of the cone-shaped calibration object or head (COB, COB_{cs}, CHE), wherein this estimation-related information is used to improve the optimization problem of the optimization process (OPP).

8. Calibration system (CBS) for calibrating autonomous mobile machines with
- an autonomous mobile machine (AMM), in particular an "Automated Guided Vehicle <AGV>", including a mobile base unit (MBU) and a 6D-motions controlled manipulator (MPL),
- a sensor device (SD), in particular a laser scanner (LS) is attached to the mobile base unit (MBU),
- a calibration object (COB, COB_{cs}, CHE), on which measurement series (MMS) are taken (tk) with the sensor device (SD, LS), wherein due to the measurement series (MMS) sensor device data (SDDT) are provided,
**characterized by:**
- the calibration object (COB, COB_{cs}, CHE) is attached (att) rigidly to the 6D-motions controlled manipulator (MPL) and is movable according to the 6D-motions of the manipulator (MPL) within a sensor device field view plane (SDFVP), in particular being considered as a 2D-slice of a 3D-environment,
- a computing unit (CPU) to compute (cmp) an accurate estimation of a mounting pose (MP, MP_{3D}, MP_{6D}) of the sensor device (SD, LS) for calibrating the autonomous mobile machine (AMM) based on geometry data (GDT) of the calibration object (COB, COB_{cs}, CHE), motion data (MDT) of the manipulator (MPL) and the sensor device data (SDDT) inputted into the computing unit (CPU).

9. Calibration system (CBS) according to claim 8, **characterized in that**
the calibration object (COB, COB_{cs}, CHE) has a geometry the accurate estimation of the mounting pose (MP, MP_{3D}, MP_{6D}) in the measurement series (MMS) for a given measurement configuration is computed analytically.

10. Calibration system (CBS) according to claim 7 or 8, **characterized in that**
the computing unit (CPU) is designed such that
- a detection trace (DTR) based on the sensor device data (SDDT) and the geometry data (GDT) is created by using the 6D-motions controlled manipulator (MPL) to move the calibration object (COB, COB_{cs}, CHE) within the sensor device field view plane (SDFVP), wherein due to this movement the detection trace (DTR) provides a 2D-pose of the calibration object (COB, COB_{cs}, CHE) relative to the sensor device (SD, LS),
- the detection trace (DTR) is matched to a reference trace (RTR) computed using the geometry data (GDT) of the calibration object (COB, COB_{cs}, CHE) and the motion data (MDT) of the 6D-motions controlled manipulator (MPL),
- an optimization process (OPP) formulating an optimization problem is applied by using the matched traces (DTR, RTR), wherein a result of the optimization problem corresponds to an accurate estimation of a 3D-mounting pose (MP_{3D}) or an accurate estimation of a 6D-mounting pose (MP_{6D}) of the sensor device (SD, LS) for calibrating the autonomous mobile machine (AMM) .

11. Calibration system (CBS) according to claim 10, **characterized in that**
the computing unit (CPU) is designed such that by controlling intersections with the sensor device field view plane (SDFVP) due to moving the calibration object (COB, COB_{cs}, CHE) in a vertical direction (VD) to the sensor device field view plane (SDFVP) the 3D-mounting pose (MP_{3D}) or the 6D-mounting pose (MP_{6D}) of the sensor device (SD, LS) along a longitudinal axis and a transverse axis is estimated.

12. Method according to one of the claims 8 to 11, **characterized in that**
the calibration object (COB, COB_{cs}, CHE) is of a material and a shape the calibration object (COB, COB_{cs}, CHE) is detectable readily and correctly by the sensor device (SD, LS).

13. Calibration system (CBS) according to claim 8 or 9, **characterized in that**
the calibration object (COB, COB_{cs}, CHE) is used as a cone-shaped calibration object (COB_{cs}) or is a two-function piece connected or shaped hand-held device (HHD) with a handle (HDL) and a cone-shaped calibration head (CHE).

14. Calibration system (CBS) according to one of the claims 10 or 11, **characterized in that**
- the calibration object (COB, COB_{cs}, CHE) is used as a cone-shaped calibration object (COB_{cs}) or is a two-function piece connected or shaped hand-held device (HHD) with a handle (HDL) and a cone-shaped calibration head (CHE),
- the computing unit (CPU) is designed such that
a circle fitting algorithm is used in the computing unit (CPU) to estimate a diameter of the cone-shaped calibration object or head (COB, COB_{cs}, CHE), wherein this estimation-related information is used to improve the optimization problem of the optimization process (OPP).
